# EUROPEAN PATENT APPLICATION

(11) **EP 2 060 997 A1**
(43) Date of publication of application: **20.05.2009**
(21) Application number: 07021995.1
(22) Date of filing: 13.11.2007
(51) Int. Cl.: G06Q 10/00, G06Q 30/00

(54) **Radiofrequency Identification (RFID) System for the wine sector**

(71) Applicant: Dodied Iberica S.L.U., 08110 Montcada i Reixac Barcelona (ES)
(72) Inventor: Torresin, Davide, 31030 Coifosco (IT); Celante, Francesco, 31100 Treviso (IT)

(57) **Abstract**

The present invention describes a Radiofrequency Identification (RFID) application for the wine sector, which allows a bidirectional flow of information between the wine producer and the consumer. This is possible because the basic units of the system, namely the Producer, the Consumer and the RFID Tags are in communication with each other through a computer network.
In this application, the producer transmits information regarding the product to the consumer, associating it with the identity code of the RFID Tags integrated in the labels applied to the bottles of wine. The information is stored in a database present in a processor, which acts as a server, belonging to the computer network. The customer has access to this information via a "client" terminal, belonging to the computer network and connected to an RFID tag read/write (R/W) unit. Via another "mobile" terminal, not necessarily belonging to the computer network but connected to an RFID tag R/W unit, the consumer stores additional feedback information on the tag memory unit, at any time, through special software. This information is then read by a further "base" terminal, belonging to the computer network and provided with an RFID tag R/W unit and saved in the database.

## Description

The present invention relates to a Radiofrequency Identification (RFID) System for the wine sector, which allows a bidirectional flow of information between the wine producer and the consumer.

### BACKGROUND OF THE INVENTION

It is possible to store a fair amount of information in the memory of an RFID transponder (or tag), decidedly more than can be stored in a bar code. Since RFID tags do not normally include a battery, they take their energy from an external electromagnetic field emitted by a reader. Obviously, the energy that reaches the inside of a tag must be sufficient to activate the integrated circuit connected to the antenna. That is why the antenna is tuned so that its resonance peak corresponds to the emission frequency of the reader. Without going into too much detail about the physics of the phenomenon, it can be verified that the proximity of some substances to the transponder is able to alter its resonance frequency or otherwise disturb the communication between tag and reader. One of these substances is water. This gives rise to the difficulty in reading, with a certain reliability and at acceptable operating distances, the information on a tag situated near a liquid mass, as it can be on a bottle for example. To avoid using excessively large tags, the reader, which communicates with the tag applied to a bottle, must be suitably tuned to different frequencies from those used by standard, commercially available readers.

The simplest and most effective way to convey the characteristics of a wine is to use a label, which however sets a space and aesthetic limit to the amount and type of information that can be given. In the past, an attempt was made to increase the amount of information given to the customer through the use of leaflets or booklets whose larger total surface allows pictures or other graphic solutions to be inserted in addition to the text. However, the information is static and does not allow, for example, formulation of sound messages. For a wine to be appreciated it must also be described and promoted correctly.

At the end of 2005, a first RAID identification application system, specific for the wine sector, was presented. This system, inserted in a wider traceability and control project at the product source, can be applied in restaurants and wine bars by fitting each table with an RFID reader.

Via the reading of an RFID tag positioned on a bottle, the system allows the activation of an audio file that transmits information regarding the identified bottle.

In addition to the reasons expressed earlier about the difficulty of reading a tag positioned on a bottle, in such a system it happens that, once the message has ended, the tag has finished carrying out its function, since it remains applied to the empty container that is inevitably thrown out with the rubbish.

### BFIEF DESCRIPTION OF THE INVENTION

The present invention describes a Radiofrequency Identification (RFII)) application for the wine sector, which allows a bidirectional flow of information between the wine producer and the consumer. This is possible because the basic units of the system, namely the Producer, the Consumer and the RFID Tags, are in communication with each other through a computer network.

In this application, the producer transmits information regarding the product to the consumer, associating it with the identity code of the RFID Tags integrated in the labels applied to the bottles of wine. The information is stored in a database present in a processor, which acts as a server, be longing to the computer network. The customer has access to this information via a "client" terminal, belonging to the computer network and connected to an RFID tag read/write (R/W) unit. Via another "mobile" terminal, not necessarily belonging to the computer network but connected to an RFID tag R/W unit, the consumer stores additional feedback information on the tag memory unit, at any time, through special software. This information is then read by a further "base" terminal, belonging to the computer network and provided with an RFID tag R/W unit, and saved in the database.

### BRIEF DESCRIPTION OF THE DRAWINGS

Figure 1 shows a block diagram of one of the possible systems on of this application, with the intention of highlighting the direction of flow of information.
Figure 2 shows the flow followed by the information that is transmitted from the wine producer to the consumer, according to the block diagram shown in figure 1.
Figure 3 shows the flow followed by the information that is transmitted from the consumer to the wine producer, again according to the block diagram shown in figure 1.

### DESCRIPTION OF THE INNOVATIVE PROPOSAL

The RFID identification system proposed below differs from the prior art in its greater interactivity between customer and producer.

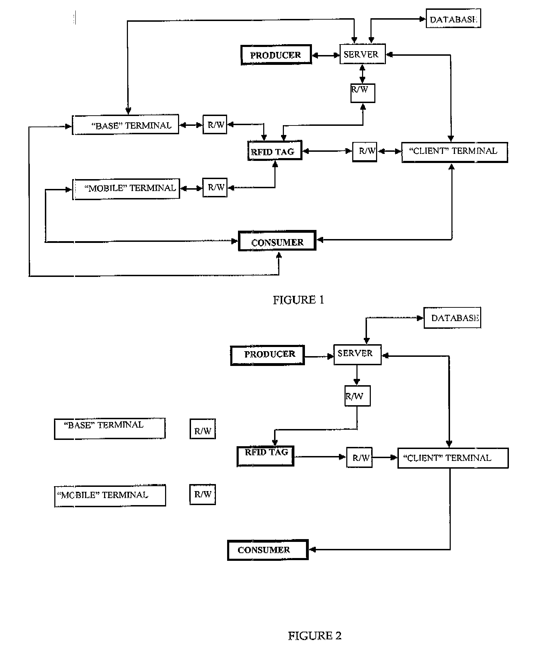

This interactivity is justified by the fact that the flow of information can take place in both directions: from the producer to the consumer and vice versa. Figures 1, 2 and 3 show block diagrams of one of the possible systems on of this application, with the intention of highlighting the direction of flow of information. The flow followed by the information that is transmitted from the wine producer to the consumer takes place, in this illustrative case, according to the route shown in fig. 2. The producer can store a set of data in a database regarding the characteristics of the wine, such as for example, year, bottling date, vineyard of origin, organoleptic information, history of the specific wine-making process, etc. During bottling of the wine and labelling of the bottles, the ID codes of the RFID tags, which are integrated in the labels applied to the bottle, are associated with the characteristics of the wine and stored in the same database. According to the communication technology used (HF, UHF, etc.), the ID tag can be unique, and also constitute a useful tool against counterfeiting of the product, or identical for all the tags corresponding to a certain type of wine. In the place where the wine is consumed or purchased, the consumer has the possibility of reading the tag ID through a read/write (R/W) unit for RFID devices, and the information is processed by a terminal station, called "client", connected to the aforesaid unit, which, since it is inside the computer network (for example internet), compares the current data of the database with the ID obtained from the "client" station. The information corresponding to the detected ID is then transmitted from the "server" to the "client" and presented in a suitable way to the consumer (images, audio, video, etc).

For brevity, from this point on, we refer to the terminal equipped with R/W units for RFID tags simply as "terminal", since it is obvious that, to be able to communicate with any RFID tag, the terminal must be connected to, or in some other way equipped with, such a unit, or that the unit is an integral part of the terminal.

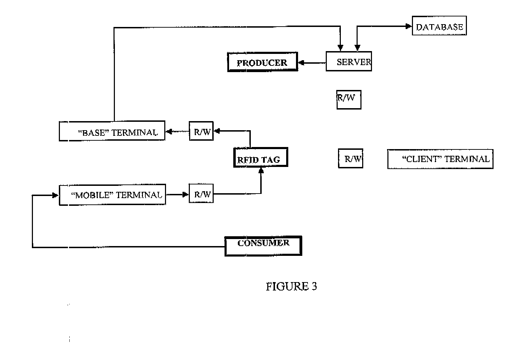

The flow of information from the consumer to the producer takes place following the diagram shown in fig. 3. After purchase or consumption, the consumer has the possibility of storing some additional information in the RFID tag, such as for example an opinion on the wine, through a second terminal station (called "mobile"), not necessarily connected to the computer network. These data can subsequently be read by any terminal station (called "base") belonging to the computer network, to allow the transfer of additional information, saved by the consumer in the RFID tag, in the same database present in the "server", or, for obvious reasons of order, in another database of the network.

It is clear how the flow of information can take place with a smaller number of terminals: the "mobile", "client" and/or "base" terminals can in some cases coincide. In a possible situation, in fact, the "client" and "base" terminals can actually be the same terminal ("client + base"). In a supermarket, for example, the "client + base" can give help to the customer as regards which food to serve with a particular wine. After consumption, the customer's comments are saved in the transponder, for example through a mobile phone equipped with R/W units for RFID tags; if the label has a removable part, in which the RFID tag is integrated, this can be separated from the bottle and, when the customer returns to the supermarket, all she/he has to do is bring the removed part of the label (containing the RFID tag) close to the "client + base" terminal to transfer his/her comments to the producer's server, so actively contributing to improving the product. Another possible situation where this application can be used positively, and where the "client" and "mobile" terminals coincide, is the following. Each table in a restaurant is fitted with a PDA or other portable device that acts as "client + mobile" terminal. When the customer is presented with a bottle provided with RFID transponder (for example, integrated in a removable part of the label), the terminal, after reading the tag ID, activates a video presentation of the characteristics of the corresponding wine, the recommended food pairings, a description of its history, and so on. At the end of the meal, the customer can store, again via the same terminal, his/her judgements on the wine, the service or anything else, which are saved in the RFID tag present on the bottle. If the removable part of the label, namely the part containing the tag, is separated from the bottle, the judgements expressed by the customer can then be detected by a fixed terminal ("base") placed next to the cash desk of the restaurant, which downloads the data entered in the tag and transfers them into a database of the computer network. The transferred data can then be printed on paper or similar medium, such as for example a receipt, and left with the customer together with the part of the label that contains the tag, as feedback for signalling that the data has been transferred or as a possible sales tool, for example in the form of a testimonial of consumption and satisfaction with the wine.

The data can be organized so that there is a database for each wine produced, or a single database for a whole series of wines belonging to the same wine company, so that the same information can be accessed from all the terminals placed in the points of sale or in the restaurants that offer bottles provided with the producer's RFID tags, and the tags can be used irrespective of the reading point. In this way, a real interactive network is created, to the benefit of all the entities involved by the flow of information: there are undoubted advantages for the producer and for the managers of the points of sale (restaurants, wine bars, supermarkets, etc.) involved in the network, because in this way it is possible to receive information about the customer's opinions (appraisal, service, etc.), and also to process statistics regarding the consumption methods, manage purchases and supplies in an optimised way, guarantee the genuineness of the product and have a valid sales tool. Customers have access to information that would otherwise require a certain level of grounding and knowledge in wine, which is not within everyone's reach, with, at the same time, the possibility of expressing their opinion on the product or on the service.

Access to the database (or databases) present on the "server" by the terminals can be carried out continually over time, with the terminals constantly connected to the server, or intermittently over time, activated by the reading of the RFID tag. Alternatively, the database containing the characteristics of the wine (or wines) can be loaded into the memory of the generic terminal, together with the software that manages the R/W unit and a suitable display system, with the updated version being downloaded periodically from the network server.

## Claims

1. A Radiofrequency Identification (RFID) application for the wine sector, working through the use of an RFID system, a computer network and databases present in the network, which allows a bidirectional flow of information between the wine producer and the consumer, where the producer transmits information regarding the product to the consumer, and associates it with the RFID transponder (RFID tag) ID code, integrated in the labels applied to the bottles of wine, through a database present on a processor, which acts as server, belonging to the computer network and the customer has access to this information via a "client" terminal, belonging to the computer network and connected to an RFID tag read/write (R/W) unit, and via another "mobile" terminal, not necessarily belonging to the computer network but connected to an RFID tag R/W unit, the consumer stores additional feedback information on the memory unit of the tag, at any time, through special software, and this information is then read by a further "base" terminal, belonging to the computer network and provided with an RFID tag R/W unit, and saved in the database.

2. A Radiofrequency Identification (RFID) application for the wine sector, as claimed in claim 1., where the "client" and "base" terminals coincide ("client + mobile").

3. A Radiofrequency Identification (RFID) application for the wine sector, as claimed in claim 1., where the "client" and "mobile" terminals coincide ("base + mobile").

4. A Radiofrequency Identification (RFID) application for the wine sector, as claimed in claim 1., where the "client", "mobile" and "base" terminals coincide ("client + mobile + base").

5. A Radiofrequency Identification (RFID) application for the wine sector, as claimed in claim 1., where the RFID tag is integrated in a removable part of the label.

6. A Radiofrequency Identification (RFID) application for the wine sector, as claimed in claim 1., where the database in which information on the product is stored is separate from the database in which the feedback information is stored.

7. A Radiofrequency Identification (RFID) application for the wine sector, as claimed in claim 1., where the terminal with the function of "client" has a version of the database present on the "server", and the connection to the "server" through the network takes place only periodically to update the database.

8. A Radiofrequency Identification (RFID) application for the wine sector, as claimed in claim 1., where the feedback information consists of judgements, for example on the appraisal of the wine.

9. A Radiofrequency Identification (RFID) application for the wine sector, as claimed in claim 8., where judgements are given in parametric form.

10. A Radiofrequency Identification (RFID) application for the wine sector, as claimed in claim 1., where the "mobile" terminal is a portable device (mobile phone, PDA, etc.).

11. A Radiofrequency Identification (RFID) application for the wine sector, as claimed in claim 2., where the "client + mobile" terminal is a portable device (mobile phone, PDA, etc.), which is connected or can be connected to the computer network.

12. A Radiofrequency Identification (RFID) application for the wine sector, as claimed in claim 3., where the "base + mobile" terminal is a portable device (mobile phone, PDA, etc.), which is connected or can be connected to the computer network.

13. A Radiofrequency Identification (RFID) application for the wine sector, as claimed in claim 4., where the "client + mobile + base" terminal is a portable device (mobile phone, PDA, etc.), which is connected or can be connected to the computer network
